Europäisches Patentamt

European Patent Office

Office européen des brevets

⑩

(11) Publication number: **0 022 332**
**B2**

(12) **NEW EUROPEAN PATENT SPECIFICATION**

(45) Date of publication of the new patent
specification: **14.12.88**

(21) Application number: **80302143.5**

(22) Date of filing: **26.06.80**

(51) Int. Cl.⁴: **B 25 J 9/00**

(54) **Industrial robots.**

(30) Priority: **30.06.79 JP 82782/79**

(43) Date of publication of application:
**14.01.81 Bulletin 81/02**

(45) Publication of the grant of the patent:
**21.03.84 Bulletin 84/12**

(45) Mention of the opposition decision:
**14.12.88 Bulletin 88/50**

(84) Designated Contracting States:
**DE FR GB**

(56) References cited:
**US-A-3 406 836**
**US-A-3 841 499**
**US-A-3 849 668**
**US-A-3 888 362**
**US-A-4 034 867**
**US-A-4 115 684**

(73) Proprietor: **FANUC LTD**
**3580, Shibokusa Aza-Komanba Oshino-mura**
**Minamitsuru-gun Yamanashi 401-05 (JP)**

(72) Inventor: **Inaba, Hajimu**
**3-16, Asahigaoka, 5-chome**
**Hino-shi Tokyo (JP)**
Inventor: **Nakajima, Seiichiro**
**Hino-shataku 407, 27 Tamadaira, 3-chome**
**Hino-shi Tokyo (JP)**
Inventor: **Inagaki, Shigemi**
**Musashino-Haimu 610 16-3, Kyounancho, 4-**
**chome**
**Musashino-shi Tokyo (JP)**

(74) Representative: **Bedggood, Guy Stuart et al**
**Haseltine Lake & Co. Hazlitt House 28**
**Southampton Buildings Chancery Lane**
**London WC2A 1AT (GB)**

EP 0 022 332 B2

Courier Press, Leamington Spa, England.

## Description

This invention relates to industrial robots.

Industrial robots are often employed in machine tool operation and are adapted to exchange tools and workpieces so that the machining operation can proceed in a fully automatic manner. Industrial robots employed in such automated operation must meet a number of important requirements: they should permit a task to be performed quickly; they should be installable even where space is limited; and they should possess freedom of movement along a straight line as required to mount and dismount a workpiece.

Hitherto disclosed industrial robots used in the automation of machine tool operation have been designed on the basis of cylindrical and polar coordinate systems or the like. In these industrial robots an elongated, rod-like arm having a manipulator attached at one end is rotated about a fixed position which serves as the center of rotation, and the arm is extended or retracted to vary the distance between the manipulator and the center of rotation. Such an arrangement results in a large distance between the handling position of a workpiece mounted in a machine tool, such as the position of a chuck in a lathe, and the center of rotation of the robot. In addition, the arm projects rearwardly of the center of rotation to a great extent. For these reasons the installed robot must be provided with a large surrounding floor space so that the robot will not interfere with adjacent equipment when going through its various motions. Much of this space is dead space. Moreover, since the arm is merely a single rod or shaft, a wide variety of manipulative operations is obviously impossible, and freedom of movement along a straight line for mounting and dismounting the workpiece, is lost. Thus it has not been possible to fully meet the requirements of an industrial robot as set forth above.

US-A-3 841 499 discloses an industrial robot having a first rotative mechanism coupled to one end of a sweep arm for rotating the sweep arm. The other end of the sweep arm is connected to a second rotative mechanism having an axis of rotation substantially perpendicular to that of the first rotative mechanism so that the attitude of the second rotative mechanism can be changed by rotation of the first rotative mechanism. Elongate arm means, extending along the axis of rotation of the second rotative mechanism, are coupled with the second rotative mechanism for rotation thereby. A gripper assembly is coupled with an end of the elongate arm means.

US-A-4 034 867 discloses a handling device with a manipulator, on the front end of an arm, which in addition to rotating and gripping functions also has a shifting function.

US-A-3 888 362 discloses an apparatus for grasping an article under the remote control of an operator, which apparatus includes (refer to Fig. 1 of US-A-3 888 362):-
a first rotative mechanism (86);

a second rotative mechanism (87) coupled with the first rotative mechanism so that the attitude of the second rotative mechanism can be changed by rotation of the first rotative mechanism, the longitudinal axis of the second rotative mechanism being substantially perpendicular to the longitudinal axis of the first rotative mechanism;

arm means (89), coupled with the second rotative mechanism so that the arm means can be rotated by rotation of the second rotative mechanism, which arm means extend perpendicularly of the longitudinal axis of the second rotative mechanism, so that rotation of the second rotative mechanism sweeps the arm means around in a first plane perpendicular to the longitudinal axis of the second rotative mechanism and so that rotation of the first rotative mechanism can sweep the arm means around in a second plane perpendicular to the first plane, and;

a finger mechanism (12, 13) coupled with the arm means;

the apparatus having

a first arm, one end of which is coupled with the first rotative mechanism, for rotation thereby, and the other end of which is coupled with one end of the second rotative mechanism so that the attitude of the second rotative mechanism can be changed by rotation of the first rotative mechanism; and

a second arm (88) one end of which is coupled with the other end of the second rotative mechanism;

the finger mechanism (12, 13) being coupled with the other end of the second arm through the said arms means which are elongate and which comprise a third arm (89), one end of which is coupled with the finger mechanism (12, 13).

According to the present invention there is provided an industrial robot, including:-
a first rotative mechanism;

a second rotative mechanism coupled with the first rotative mechanism so that the attitude of the second rotative mechanism can be changed by rotation of the first rotative mechanism, the longitudinal axis of the second rotative mechanism being substantially perpendicular to the longitudinal axis of the first rotative mechanism;

arm means, coupled with the second rotative mechanism so that the arm means can be rotated by rotation of the second rotative mechanism, which arm means extend perpendicularly of the longitudinal axis of the second rotative mechanism, so that rotation of the second rotative mechanism sweeps the arm means around in a first plane perpendicular to the longitudinal axis of the second rotative mechanism and so that rotation of the first rotative mechanism can sweep the arm means around in a second plane perpendicular to the first plane, and;

a finger mechanism coupled with the arm means;

the robot having

a first arm, one end of which is coupled with the first rotative mechanism, for rotation thereby, and the other end of which is coupled with one end of the second rotative mechanism so that the attitude of the second rotative mechanism can be changed by rotation of the first rotative mechanism; and

a second arm one end of which is coupled with the other end of the second rotative mechanism;

the finger mechanism being coupled with the other end of the second arm through the said arm means which are elongate and which comprise a third arm, one end of which is coupled with the finger mechanism, and transverse movement drive means coupled between the other end of the third arm and the other end of the second arm, for moving the third arm transversely of the second arm and substantially parallel to the longitudinal axis of the second rotative mechanism.

An embodiment of the present invention can provide an industrial robot which can be installed in close proximity to a machine tool and which is capable of minimising working time.

An embodiment of the present invention can provide an industrial robot which requires very little floor space for installation and which is capable of operating effectively even in a very limited amount of floor space.

An embodiment of the present invention can provide an industrial robot which is capable of performing all necessary operations, even with a limited degree of freedom, by providing perpendicularly intersecting rotative mechanisms and making effective utilization of linear motion.

Further, an embodiment of the present invention can provide an industrial robot which employs a servo mechanism in a drive mechanism for driving finger and arm mechanisms.

Briefly, in one embodiment of the present invention, an industrial robot is provided with first and second rotative mechanisms adapted to support an arm. That is, the rotative mechanisms are linked together. The second rotative mechanism which co-operates in supporting the arm intersects the arm at right angles. That is, the axis of rotational movement caused by the second rotative mechanism is at right angles to the direction of the linkage. The first rotative mechanism is perpendicularly disposed with respect to the second rotative mechanism and supports the second rotative mechanism such that the attitude thereof can be changed. That is the axes of rotational movements which can be caused by the first and second mechanisms respectively are perpendicular to one another. For example, the arm or linkage provides a 90° bend so that the axis of rotational movement of the first rotative mechanism and the second rotative mechanism are at 90° to one another. In effect, it can be said, the first rotative mechanism is aligned with the arm or linkage and the second rotative mechanism is at right angles to the arm or linkage. The end of the second rotative mechanism not connected to the arm is provided with a further arm, which is in turn connected to a transversely movable member which carries another arm to which the finger mechanism is connected. The transversely movable member is for moving the arm to which the finger mechanism is connected at right angles to the longitudinal direction of the further arm.

Reference will be made, by way of example, to the accompanying drawings, in which:-

Figures 1 to 3 are schematic perspective views for assistance in describing both the structure of and an operational sequence effected by an arm mechanism of a robot embodying the present invention so far as rotation and transverse movement are concerned but do not show an extendible shaft mechanism thereof;

Figure 4 is a schematic perspective view showing a different attitude of the arm mechanism of the robot as illustrated in Figure 1;

Figures 5 and 6 are schematic perspective views useful in describing the structure and operation of the robot of Figure 1 showing also the extendible shaft mechanism;

Figure 7 is a perspective view illustrating the external appearance of a robot embodying the present invention; and

Figure 8 is a perspective view showing the interior of the arm mechanism of a robot embodying the present invention.

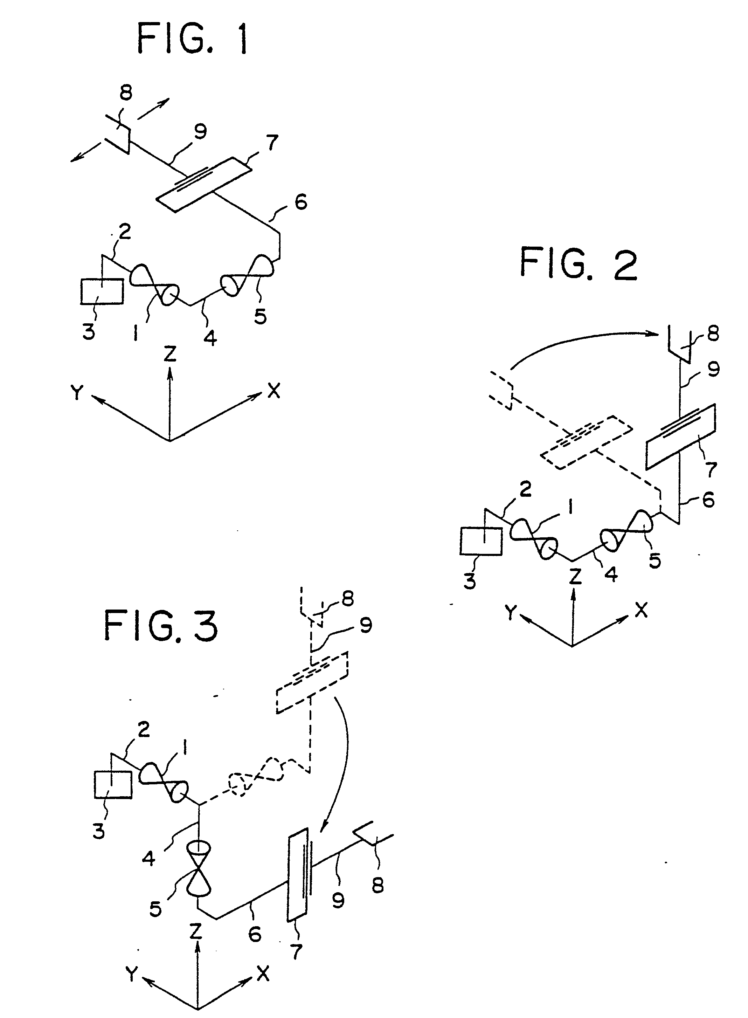

The basic structure of the arm mechanism belonging to a robot embodying the present invention, so far as rotation and transverse movement are concerned, is shown in Figures 1 to 3, wherein Figure 1 shows the arm mechanism at the beginning of an operational sequence, Figure 2 during the course of the operational sequence, and Figure 3 at the end of the operational sequence.

A first rotative mechanism 1 is interposed between a pair of arms 2, 4 and is adapted to rotate the arm 4 relative to the arm 2 about the longitudinal axis of the first rotative mechanism 1 as seen in the Figures. The latter is secured at one end, as seen in the Figure, to a base 3 through the arm 2, which has a 90° bend, and is connected at the other end to the arm 4 which also has a 90° bend. A second rotative mechanism 5 is coupled at one end to the arm 4, and is connected at the other end to an arm 6. The arm 6 is configured to extend slightly from the second rotative mechanism 5 in the direction of the positive X-axis (as indicated in the Figure), then a short distance in the direction of the positive Z-axis (as indicated in the Figure), and finally over a major portion of its length in the direction of the positive Y-axis (as indicated in the Figure), this end of the arm being coupled to a transverse movement drive means 7. An arm 9 connects the transverse movement drive means 7 with a finger mechanism 8. It will be appreciated from Figure 1 that the longitudinal axes of the respective rotative mechanism are arranged so as to cross each other at right angles and that the transverse movement provided by member 7 is parallel to the longitudinal axis of rotative mechanism 5.

The robot arm mechanism described above is capable of being operated in the following manner. First, the transverse movement drive means 7 is actuated to move the finger mechanism 8 in directions along the X-axis (as indicated by arrows) from the position it is shown occupying in Figure 1, with the arm 6 being held stationary. This causes the finger mechanism 8 to abut against and grip a machined workpiece held by, for example, a chuck in a machine tool. The means 7 is then reactuated to move the finger mechanism 8 back to the position it originally occupied in Figure 1, whereby the finger mechanism extracts the workpiece from the chuck and continues to grip it firmly. Next, the second rotative mechanism 5 is driven to rotate the arm 9 by 90° in a plane parallel to the Y-Z plane, thereby placing the arm 9 in a vertical attitude, as shown in Figure 2. The first rotative mechanism 1 is then rotated to turn the arm 9 in a plane parallel to the X-Z plane, as illustrated in Figure 3, so that the finger mechanism 8 is shifted at then stopped at a prescribed position above a workpiece feeder, by way of example. This is followed by actuation of the transverse movement drive means 7 so as to lower the finger mechanism 8, after which the finger mechanism is caused to loosen its grip and release the finished workpiece, thereby setting the workpiece on the feeder.

The three degrees of freedom provided by the first rotative mechanism, the second rotative mechanism and the transversally movable member allow the finger mechanism 8 to be moved along two perpendicular side walls of a machine tool frame, and also permit the workpiece, after having been removed from the chuck, to be rotated by 90° and placed on the workpiece feeder without relying upon the twisting action of a wrist portion.

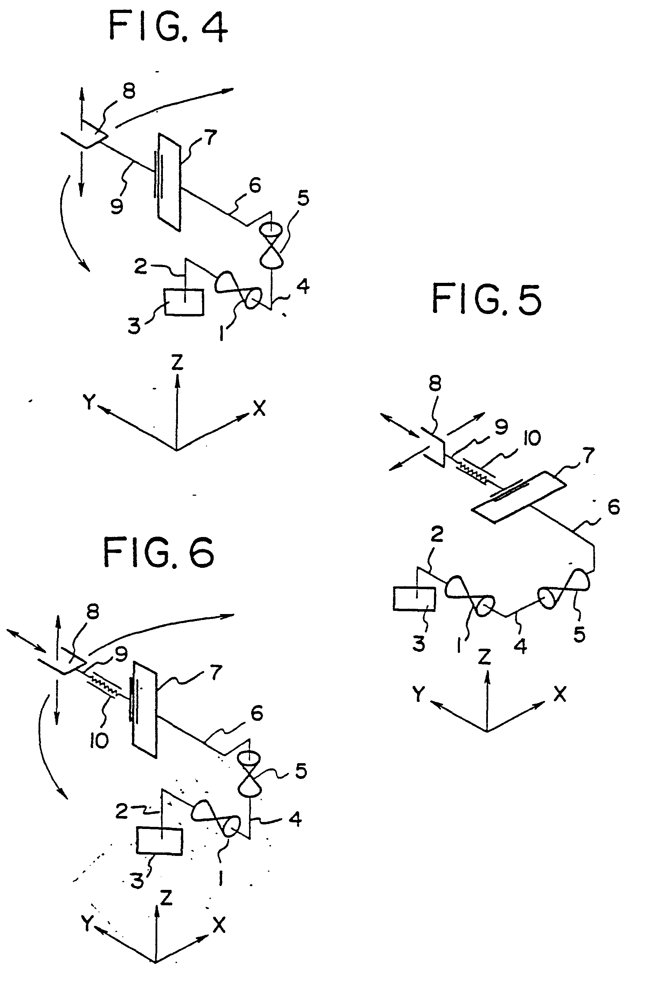

The robot arm mechanism can also be operated by rotating the first rotative mechanism 1 prior to the second rotative mechanism 5 to align the longitudinal axis of the second rotative mechanism 5 with the Z-axis as shown in Figure 4, after which the second rotative mechanism 5 may be rotated to swing the finger mechanism 8 in a horizontal plane, that is, in a plane which is parallel to the X-Y plane. Thus, if the second rotative mechanism 5 is rotated starting from the attitude shown in Figure 4, the finger mechanism 8 can be moved along the surface of the workpiece feeder. If an unmachined workpiece is resting upon the workpiece feeder and is to be carried to the chuck, the transverse movement drive means 7 can be actuated to raise the finger mechanism 8, after which the second rotative mechanism 5 is rotated to swing the finger mechanism 8 to a position above the unmachined workpiece. The transverse movement drive means 7 is then reactuated so as to lower the finger mechanism 8 and permit it to grasp the unmachined workpiece. The latter is then fitted into the chuck by commanding the robot to reverse the foregoing sequence.

In a robot embodying the present invention, a further degree of freedom is added by providing the arm mechanism with an extendible shaft. This enables a greater variety of robot movements. The resulting structure is shown in Figures 5 and 6. Here an extendible shaft 10 is provided between the arm 9 and the transverse movement drive means 7 to enable the finger mechanism 8 to be moved longitudinally of the arm 9.

It should be noted that the variety of robot movements can be increased even further by providing the arms 2, 4 and 6 with their own extendible shafts, although such a modification is not shown in the drawings. It is also possible to provide a wrist mechanism on the end of the arm 9 to permit the twisting of the finger mechanism 8, and to provide a rotative mechanism that can swing the finger mechanism 8 around the longitudinal axis of the arm 9. However, such wrist and rotative mechanisms are diverse in construction and well known in the art and need not be described in further detail.

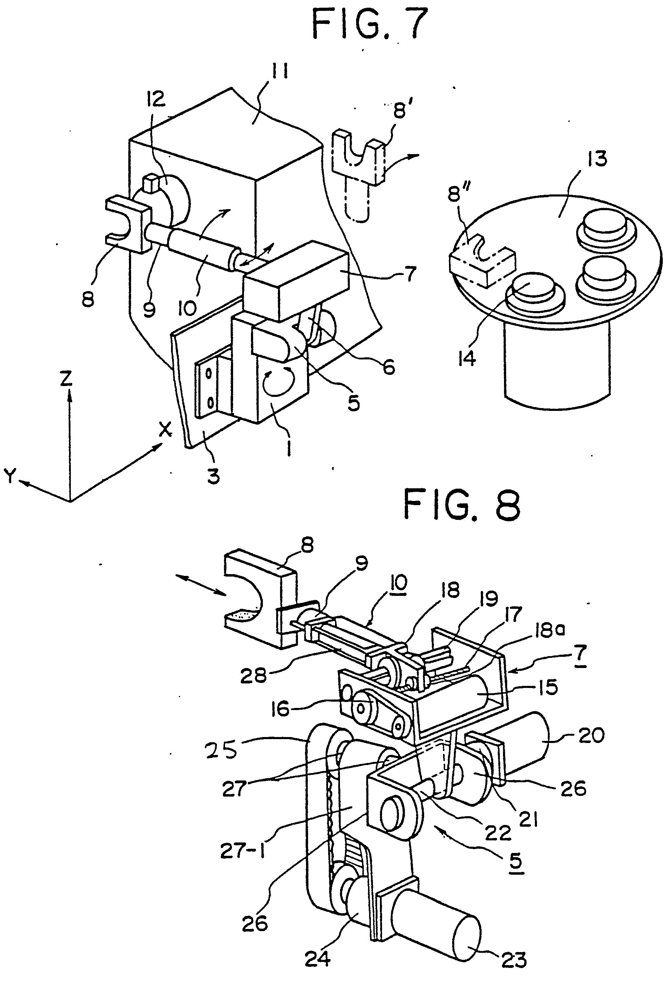

The external configuration of a robot in accordance with the embodiment of the invention described above is shown in a perspective view in Figure 7, in which reference numeral 11 denotes a machine tool, 12 a chuck provided on the machine tool, 13 a workpiece feeder, and 14 a workpiece. Like or corresponding component parts bear the same reference numerals as those used in Figures 1 to 6.

The robot shown in Figure 7 operates as follows. First, the transverse movement drive means 7 is actuated to bring the finger mechanism 8 to the vicinity of the chuck 12 so that the finger mechanism can grasp a machined workpiece which is being held by the chuck. Following this the transverse movement drive means 7 is driven in the opposite direction to remove the workpiece from the chuck. Next the second rotative mechanism 5 is actuated to swing the finger mechanism 8 in a plane which is parallel to the Y-Z plane and move the finger mechanism to the position designated by numeral 8'. Thereafter the first rotative mechanism 1 is actuated to swing the finger mechanism 8 in a plane which is parallel to the X-Z plane and move the finger member to the position designated by numeral 8'', and the extendible shaft 10 is actuated to extend the arm 9. This operation positions the finger mechanism 8, which is still grasping the workpiece, over the workpiece feeder 13, so that the workpiece 14 can be set on the feeder by causing the finger mechanism 8 to release its grasp. Mounting an unmachined workpiece in the chuck of the machine tool can be carried out by the robot hand mechanism merely by reversing the foregoing sequence.

One form of internal structure for a robot arm mechanism is shown in the perspective view of Figure 8. The transverse movement drive means 7 includes a motor 15, a timing belt 16, a ball bearing feed screw 17, a bracket 18 and a ball bearing spline 19. The motor 15 is adapted to rotate the feed screw 17 through the timing belt 16. The bracket 18 for supporting the finger mechanism 8 is mounted on the ball bearing spline 19 and is fixed against rotational movement thereby. Fixedly secured to the bracket 18 is a nut 18a which is screwed onto the feed screw 17. To move the bracket 18 the motor 15 is driven to rotate the feed screw 17 via the timing belt 16. The nut 18a travels along the screw 17 as the latter rotates and causes the bracket 18 to slide along the ball bearing spline 19.

The second rotative mechanism 5 includes a motor 20, a reduction gear 21, and a shaft 22 coupled to the reduction gear 21. Running the motor 20 rotatably drives the shaft 22 through the reduction gear 21 to swing the transversally movable member 7 which is connected to the shaft 22 through the arm 6.

The first rotative mechanism 1 is composed of a motor 23, a reduction gear 24, a timing belt 25, a bracket 26 for axially supporting the second rotative mechanism 5 and a rotary shaft 27 which is coupled to the bracket 26. The motor 23 is fixedly secured to a base 27-1, and the rotary shaft 27 is rotatively mounted to the base 27-1. Running the motor 23 drives the rotary shaft 27 through the reduction gear 24 and timing belt 25 to rotate the bracket 26.

The extendible shaft 10 includes an air cylinder 28 which is secured to the bracket 18 and which accommodates a piston having a rod that is splined on the arm 9. The finger mechanism 8 is moved in the direction of the arrow as the piston slides within the air cylinder 28.

While the robot embodied by the arrangement of Figure 8 employs motors to drive the respective arms, it is also possible to substitute other actuators for the motors, such as air cylinders, hydraulic motors or hydraulic cylinders.

It will be appreciated that the opposite "ends" of the rotative mechanisms as shown schematically and symbolically in Figures 1 to 6 can be identified in the physical structure of the arm mechanism of Figure 8 by considering, for example, the coupling of the rotary shaft 27 with the bracket 26 as one end, and considering the mounting of the motor 23 on the base 27-1 as the other end. Simply put, one "end" of a rotative mechanism remains stationary when the mechanism is operated, and the other "end" rotates. In other words, a rotative mechanism can be considered to comprise a primary component, a secondary component and drive means operable to establish relative rotational movement between the primary and secondary components. In Figure 8, for the first rotative mechanism, the rotary shaft 27, for example, provides the primary component, the motor 27 and associated means (e.g. gear 24, belt 25) are the drive means and parts mounting the motor on the base 27-1 provide the secondary component. One end of the first rotative mechanism is provided in the coupling of the rotary shaft 27 to the bracket and this is the rotating end, the other (stationary) end of the first rotative mechanism is provided in the mounting of the motor on the base 27-1.

The ends of a rotative mechanism are parts thereof between which the mechanism can produce relative rotational movement and which are coupled or linked to other members not of the mechanism.

The "longitudinal axis" of a rotative mechanism, which can be identified in Figures 1 to 6 corresponds, in the physical structure of the rotative mechanism, to the axis about which relative rotation is produced, e.g. the axis of shaft 27 in the case of mechanism 1.

It will further be appreciated that an "arm" as shown schematically and symbolically in Figures 1 to 6 can be identified with any effective mechanical coupling or link, for example, the bracket 26.

In the foregoing embodiments the source of driving power for either the first or the second rotative mechanism may consists of a servo mechanism which relies upon electricity, oil pressure, air pressure or the like, enabling the robot to be operated under feedback control. Furthermore, such a servo mechanism can be used to construct the driving source for either the transverse movement drive means 7 or the extendible shaft or for both of these in addition to the rotative mechanisms. In other words, if desired, servo mechanisms can be adopted for all of the above, namely the first and second rotative mechanisms, the transversally movable member and the extendible shaft, or can be applied selectively as required. The particular combination will depend upon the design requirements.

In accordance with the present invention as described above, the arm mechanism of a robot can be moved along the two perpendicular side walls of a machine tool frame so that the space required for the robot to operate can be reduced markedly over the conventional robots that are based on polar or cylindrical coordinate systems.

As will be seen, for example from Figures 7 and 8, the arm 9, with its extendible shaft 10 and with the transverse movement drive means 7, provides an elongate arm means which gives the robot its reach for handling workpieces. At the end of the elongate arm means the finger mechanism 8 is mounted. The elongate arm means extends generally perpendicularly of the longitudinal axis of the second rotative mechanism 5. Thus, by rotation of the second rotative mechanism, the elongate arm means can be swept around in the YZ plane as seen in Figure 7, whilst by rotation of the first rotative mechanism the elongate arm means can be swept around in the XZ plane as seen in Figure 7. Operation of the arm mechanism is quicker since smaller angles are covered by the arms. In addition, since the attitude of a workpiece is shifted by 90° at the same time that the workpiece is moved along the perpendicular side walls of the machine tool frame, it is no longer required that a wrist be twisted to align a horizontally disposed surface of the workpiece with the vertically disposed surface of the chuck prior to mounting of the workpiece. It is possible, therefore, to dispense with the wrist mechanism and an associated control system so that the overall cost of the robot can be reduced. Furthermore, the hand is furnished with an additional degree of freedom by providing the transverse movement drive means on the shaft connected to the finger mechanism, thereby facilitating such delicate operations as attaching and detaching a workpiece to and from the chuck. Still another degree of freedom is obtained by providing an arm with an extendible shaft to further enhance operation of the arm mechanism.

Thus, industrial robots are widely used in the automation of machine tool operation and permit tools and workpieces to be exchanged without the intervention of human labour. The present invention concerns the provision of industrial robots having two rotative mechanisms that are adapted to rotate arms or links about axial directions thereof and which are interconnected such that the longitudinal axes of the mechanisms (about which they cause rotation) are oriented or intersect at right angles. An arm which belongs to the first rotative mechanism is secured to a base of the robot (e.g. the first rotative mechanism is linked to a fixed base), and a gripping member is attached to the end of a free arm which belongs to the second rotative mechanism (e.g. the second rotative mechanism is linked to a movable gripping member). The robot having a hand or manipulative member of the foregoing construction permits gripping member to be moved in a plane which is parallel to an X-Z plane, and then in a plane which is parallel to a Y-Z plane so that a workpiece or tool replacement can be moved along the perpendicular side walls of a machine tool frame. This greatly reduces the distances which the gripping member must traverse in performing a task and furnishes a great degree of freedom for operations along a straight line. The end result is a quicker operating speed and a reduced floor space requirement for installation. The degrees of freedom are increased by providing the robot arms or links with additional mechanisms, particularly between the second rotative mechanism and the gripping member, such as a rotative mechanism for rotating the gripping member about the arm or link, an extendible shaft for extending the arm or link, and a linear drive mechanism for moving the gripping member at right angles to the longitudinal axis of the arm or link. Servo mechanisms may constitute the means for driving the rotative mechanisms the extendible shaft and the linear drive mechanism.

## Claims

1. An industrial robot, including:-
a first rotative mechanism (1; 23, 24, 25);
a second rotative mechanism (5; 20, 21) coupled with the first rotative mechanism so that the attitude of the second rotative mechanism can be changed by rotation of the first rotative mechanism, the longitudinal axis (22) of the second rotative mechanism being substantially perpendicular to the longitudinal axis (27) of the first rotative mechanism;
arm means (7, 9, 10), coupled with the second rotative mechanism so that the arm means can be rotated by rotation of the second rotative mechanism, which arm means (7, 9, 10) extend perpendicularly of the longitudinal axis (22) of the second rotative mechanism (5; 20, 21), so that rotation of the second rotative mechanism (5; 20, 21) sweeps the arm means (7, 9, 10) around in a first plane perpendicular to the longitudinal axis (22) of the second rotative mechanism (5; 20, 21) and so that rotation of the first rotative mechanism (1; 23, 24; 25) can sweep the arm means (7, 9, 10) around in a second plane perpendicular to the first plane, and;
a finger mechanism (8) coupled with the arm means;
the robot having
a first arm (4; 26, 27), one end of which is coupled with the first rotative mechanism (1; 23; 24; 25), for rotation thereby, and the other end of which is coupled with one end of the second rotative mechanism (5; 20, 21) so that the attitude of the second rotative mechanism (5; 20, 21) can be changed by rotation of the first rotative mechanism (1; 23, 24, 25); and
a second arm (6) one end of which is coupled with the other end of the second rotative mechanism (5; 20, 21);.
the finger mechanism (8) being coupled with the other end of the second arm (6) through the said arm means (7, 9, 10) which are elongate and which comprise a third arm (9), one end of which is coupled with the finger mechanism (8), and transverse movement drive means (7) coupled between the other end of the third arm (9, 10) and the other end of the second arm (6), for moving the third arm (9, 10) transversely of the second arm (6) and substantially parallel to the longitudinal axis (22) of the second rotative mechanism (5; 20, 21).

2. An industrial robot according to claim 1, wherein the third arm (9, 10) has extendible shaft means (10) for varying the length of that arm.

3. An industrial robot according to claim 2, further comprising a rotative mechanism for rotating the finger mechanism about the third arm.

4. An industrial robot according to claim 2 or 3, in which a servo mechanism constitutes the driving source for the transverse movement drive means.

5. An industrial robot according to claim 2, 3 or 4, further comprising an extendible shaft for varying the length of the first or the second arm.

6. An industrial robot according to claim 5, in which a servo mechanism constitutes the driving source for said extendible shaft.

7. An industrial robot according to any one of the claims 2 to 6, in which a servo mechanism constitutes the driving source for at least one of the first and second rotative mechanisms.

## Patentansprüche

1. Industrieroboter, mit einer ersten, Drehbewegung ermöglichenden Mechanik (1; 23, 24, 25);
mit einer zweiten, Drehbewegung ermöglichenden Mechanik (5; 20, 21), die mit der ersten, Drehbewegung ermöglichenden Mechanik derart gekoppelt ist, daß die Stellung der zweiten, Drehbewegung ermöglichenden Mechanik durch Ausführung einer Drehbewegung der ersten, Drehbewegung ermöglichenden Mechanik verändert werden kann, wobei die Längsachse (22) der zweiten, Drehbewegung ermöglichenden Mechanik im wesentlichen senkrecht zur Längsachse (27) der ersten, Drehbewegung ermöglichenden Mechanik ist;

mit einer armartigen Einrichtung (7, 9, 10), die mit der zweiten, Drehbewegung ermöglichenden Mechanik derart gekoppelt ist, daß die armartige Einrichtung durch Drehbewegung der zweiten, Drehbewegung ermöglichenden Mechanik gedreht werden kann, wobei die armartige Einrichtung (7, 9, 10) sich senkrecht zur Längsachse (22) der zweiten, Drehbewegung ermöglichenden Mechanik (5, 20, 21) derart derstreckt, daß die Drehbewegung der zweiten, Drehbewegung ermöglichenden Mechanik (5; 20, 21) die armartige Einrichtung (7, 9, 10) in einer ersten Ebene schwenkt, auf der die Längsachse (22) der zweiten, Drehbewegung ermöglichenden Mechanik (5; 20, 21) senkrecht steht, und daß die Drehbewegung der ersten, Drehbewegung ermöglichenden Mechanik (1; 23, 24, 25) die armartige Einrichtung (7, 9, 10) in einer zweiten Ebene schwenken kann, die senkrecht zur ersten Ebene steht, und

mit einer Fingermechanik (8), die mit der armartigen Einrichtung gekoppelt ist;

wobei der Roboter aufweist:

einen ersten Arm (4; 26, 27), dessen eines Ende mit der ersten Drehbewegung ermöglichenden Mechanik (1; 23, 24, 25) gekoppelt ist, um diesen eine Drehbewegung ausführen zu lassen, und dessen anderes Ende mit einem Ende der zweiten, Drehbewegung ermöglichenden Mechanik (5; 20, 21) derart gekoppelt ist, daß durch Drehbewegung der ersten, Drehbewegung ermöglichenden Mechanik (1; 23, 24, 25) die Stellung der zweiten, Drehbewegung ermöglichenden Mechanik (5; 20, 21) verändert werden kann; und

einen zweiten Arm (6), dessen eines Ende mit dem anderen Ende der zweiten, Drehbewegung ermöglichenden Mechanik (5; 20, 21) gekoppelt ist;

wobei die Fingermechanik (8) mit dem anderen Ende des zweiten Arms (6) über die armartige Einrichtung (7, 9, 10) gekoppelt ist, die länglich ausgebildet ist und die einen dritten Arm (9) aufweist, dessen eines Ende mit der Fingermechanik (8) gekoppelt ist, sowie eine Antriebseinrichtung (7) für Transversalbewegung, die zwischen dem anderen Ende des dritten Arms (9) und dem anderen Ende des zweiten Arms (6) gekoppelt ist, um den dritten Arm (9, 10) quer zum zweiten Arm (6) und im wesentlichen parallel zur Längsachse (22) der zweiten, Drehbewegung ermöglichenden Mechanik (5; 20, 21) zu bewegen.

2. Industrieroboter nach Anspruch 1, bei dem der dritte Arm (9, 10) eine verlängerbare, wellenartige Einrichtung (10) hat, mit der die Länge des Arms veränderbar ist.

3. Industrieroboter nach Anspruch 2, gekennzeichnet dadurch, daß desweiteren eine Drehbewegung ermöglichende Mechanik vorgesehen ist, mit der die Fingermechanik (8) um den dritten Arm gedreht werden werden kann.

4. Industrieroboter nach Anspruch 2 oder 3, gekennzeichnet dadurch, daß ein Servomechanismus als Antriebsquelle für die Antriebseinrichtung (7) für·transversale Bewegung vorgesehen ist.

5. Industrieroboter nach Anspruch 2, 3 oder 4 gekennzeichnet dadurch, daß desweiteren eine verlängerbare Welle zur Veränderung der Länge des ersten oder des zweiten Armes vorgesehen ist.

6. Industrieroboter nach Anspruch 5, gekennzeichnet dadurch, daß ein Servomechanismus die Antriebsquelle für diese verlängerbare Welle bildet.

7. Industrieroboter nach einem der Ansprüche 2 bis 6 gekennzeichnet dadurch, daß ein Servomechanismus die Antriebsquelle für wenigstens eine der Drehbewegung ermöglichenden ersten und zweiten Mechanik bildet.

**Revendications**

1. Un robot industriel comprenant:

un premier mécanisme de rotation (1; 23, 24, 25);

un second mécanisme de rotation (5; 20, 21) accouplé au premier mécanisme de rotation de façon à ce que l'orientation du second mécanisme de rotation puisse être modifiée par rotation du premier mécanisme de rotation, l'axe longitudinal (22) du second mécanisme de rotation étant sensiblement perpendiculaire à l'axe longitudinal (27) du premier mécanisme de rotation;

des moyens à bras (7, 9, 10), accouplés au second mécanisme de rotation de façon à ce que les moyens à bras puissent être mis en rotation par rotation du second mécanisme de rotation, ces moyens à bras (7, 9, 10) s'étendant perpendiculairement à l'axe longitudinal (22) du second mécanisme de rotation (5; 20, 21) de façon à ce que la rotation du second mécanisme de rotation (5; 20, 21) fasse balayer les moyens à bras (7, 9, 10) dans un premier plan perpendiculaire à l'axe longitudinal (22) du second mécanisme de rotation (5; 20, 21) et que la rotation du premier mécanisme de rotation (1; 23, 24; 25) puisse faire balayer les moyens à bras (7, 9, 10) dans un second plan perpendiculaire au premier plan; et

un mécanisme à doigts (8) accouplé aux moyens à bras;

le robot présentant

un premier bras (4; 26, 27) dont une extrémité est reliée au premier mécanisme de rotation (1; 23; 24; 25) pour être entraîné en rotation par celui-ci et dont l'autre extrémité est reliée à une extrémité du second mécanisme de rotation (5; 20, 21) de façon à ce que l'orientation du second mécanisme de rotation (5; 20, 21) puisse être modifiée par rotation du premier mécanisme de rotation (1; 23, 24, 25); et

un second bras (6) dont une extrémité est reliée à l'autre extrémité du second mécanisme de rotation (5; 20, 21);

le mécanisme à doigts (8) étant relié à l'autre extrémité du second bras (6) par l'intermédiaire desdits moyens à bras (7, 9, 10) qui sont allongés et qui comprennent un troisième bras (9) dont une extrémité est reliée au mécanisme à doigts (8) et des moyens d'entraînement à déplacement transversal (7) reliés entre l'autre extrémité du troisième bras (9, 10) et l'autre extrémité du second bras (6) afin de déplacer le troisième bras (9, 10) transversalement au second bras (6) et de manière sensiblement parallèle à l'axe longitudinal (22) du second mécanisme de rotation (5; 20, 21).

2. Un robot industriel selon la revendication 1, dans lequel le troisième bras (9, 10) présente des moyens à arbre extensible (10) destinés à faire varier la longueur de ce bras.

3. Robot industriel selon la revendication 2, comprenant en outre un mécanisme de rotation destiné à faire tourner le mécanisme à doigts autour du troisième bras.

4. Robot industriel selon la revendication 2 ou 3, dans lequel un mécanisme asservi constitue la source d'entraînement des moyens d'entraînement à déplacement transversal.

5. Robot industriel selon la revendication 2, 3 ou 4, comprenant en outre un arbre extensible destiné à faire varier la longueur du premier ou du second bras.

6. Robot industriel selon la revendication 5, dans lequel un mécanisme asservi constitue la source d'entraînement dudit bras extensible.

7. Robot industriel selon l'une quelconque des revendications 2 à 6, dans lequel un mécanisme asservi constitue la source d'entraînement d'au moins l'un des premier et second mécanismes d'entraînement.

# FIG. 1

# FIG. 2

# FIG. 3

# FIG. 4

# FIG. 5

# FIG. 6

2

# FIG. 7

# FIG. 8